# EUROPEAN PATENT APPLICATION

(11) **EP 2 879 438 A1**
(43) Date of publication of application: **03.06.2015**
(21) Application number: 13823093.3
(22) Date of filing: 26.07.2013
(51) Int. Cl.: H04W 48/12, H04W 48/16, H04W 48/18

(54) **COMMUNICATION SYSTEM, NODE APPARATUS, METHOD AND PROGRAM**

(30) Priority: 27.07.2012 JP 2012167234
(71) Applicant: NEC Corporation, Tokyo 108-8001 (JP)
(72) Inventor: TAMURA, Toshiyuki, Tokyo 108-8001 (JP); TAKANO, Yusuke, Tokyo 108-8001 (JP)
(74) Representative: Mathys & Squire LLP
(86) International application number: PCT/JP2013/070319
(87) International publication number: WO 2014/017630

(57) **Abstract**

A decision on whether or not offloading to a different radio access network is made as a communication amount as well as a charging mode at a terminal and serviceability are taken into account. There is provided a node (ANDSF 40) that obtains subscriber information of a terminal (10) from a home subscriber server, while obtaining a communication amount of the terminal from a charging server. The node decides and controls whether or not to notify information concerning a different radio access network capable of becoming an offload target from the current access network based on the a charging mode in the subscriber information and the information concerning the communication amount of the terminal.

## Description

### TECHNICAL FIELD

### (DESCRIPTION OF RELATED APPLICATION)

The present Application claims priority based on JP Patent Application 2012-167234 filed in Japan on July 27, 2012, the total contents thereof being incorporated into the present Application by reference.

This invention relates to a communication system, a node apparatus, a method for communication and a program.

### BACKGROUND

In recent years, an amount of communication traffic per terminal (UE: User Equipment) is increasing sharply by spreading of smart phones. For this reason, a congestion of a mobile network of a mobile operator (it is also called a "communication enterprise" and a "communication operator") has become a big problem.

As one of effective measures to cope with this problem, mobile operators have directed attention to offloading (bypassing) in which a communication flow from a subscriber terminal (UE) is switched from a mobile network to another network such as wireless LAN (Local Area Network), utilizing for example, Wi-Fi (Wireless Fidelity) technique (where Wi-Fi is a registered trademark of Wi-Fi Alliance). Thus, mobile operators are proactively carrying out offloading measure such as installing additional wireless LAN access points, also called simply the 'access points' or 'hotspots'. It is noted that Wi-Fi means testing or authentication of interconnectivity or interchangeability of wireless LAN of IEEE (The Institute of Electrical and Electronics Engineers Inc.) 802.11 series which is practiced by Wi-Fi Alliance.

### SUMMARY

### TECHNICAL PROBLEM

The following gives analyses of the related technique. In the description to follow, an issue regarding offloading from a mobile communication access network to another radio access network, such as Wi-Fi will be discussed (according to result of analysis by the present inventors).

Among charging plans, provided by a mobile operator, there is, for example, a double flat rate system. In this system, charging of communication is done by a flat rate up to a predetermined first threshold of a communication amount (traffic amount) and by a usage based rate when traffic amount exceeds the first threshold value and is below a second threshold value (where the second threshold value is greater than the first threshold value). When the traffic amount exceeds the second threshold value, the communication is to be subject to offloading. In this case, there is a possibility that a given terminal subscriber intrinsically already should have reached an upper limit of charging but, since offloading has been introduced, the upper limit of charging has not as yet been reached for the terminal subscriber. The following will account for such possibility.

If a large number of wireless LAN access points (public wireless LAN), such as Wi-Fi, are present in an activity area of a subscriber, the subscriber will use the wireless LAN access points for all time. In the case wherein a contract between a mobile operator and a subscriber is such that no packet count is made for a wireless LAN access thus allowing data communication to be supplied free of cost, it is not possible for the mobile operator to maintain ARPU (Average Revenue Per User: a monthly sale per subscriber at a communication carrier), thus possibly leading to a reduced revenue.

There is also such a service system operating under a charging plan which itself is truly a flat rate charging system but in which, in case the number of packets communicated exceeds a certain threshold value, limitations are imposed on a communication speed in a mobile network. For example, if, in this service system, a data amount exceeds an upper limit value, the maximum value of a send/receive communication speed is drastically reduced until an end of the month. A public wireless LAN equipment is installed in, for example, a cafe, fast food store, a precinct of a railroad station or an airport, and access by wireless LAN is not optimum for high speed movement. There are thus users (subscribers) of smart phones or the like who basically do not like having access by wireless LAN. However, these users (subscribers) may conclude that, if limitations are imposed on the communication speed with a mobile network (3GPP (third Generation Partnership Project)) such that a communication speed higher than a preset speed cannot be assured with a radio access via the mobile network, it would be more convenient for them to use a radio access network different from a radio access network defined by 3GPP. In this case, the users (subscribers) would prefer using entirely an access by wireless LAN.

In consideration of such problems, it is desirable for a mobile operator trying offloading to sufficiently take account of charging to the subscriber as well as serviceability that may be rendered to the subscriber before deciding whether or not to carry out the offloading.

The present invention has been invented in consideration of the above problems, and it is an object of the present invention to provide a communication system, an apparatus for communication, a method for communication and a program, in which a decision on whether or not to do offloading may be made in a way that takes a communication amount of a terminal, its charging mode and serviceability into account.

### SOLUTION TO PROBLEM

According to the present invention, there is provided a communication system comprising:
a terminal that is able to switch from a mobile communication access network to a radio access network different from the mobile communication access network to communicate therewith; and
a node that controls notification to the terminal of information concerning a radio access network that is different from the mobile communication access network and that is capable of becoming an offload target from the mobile communication access network, based on information concerning a charging mode as set for the terminal and on information concerning a communication amount of the terminal.

According to the present invention, there is also provided a node apparatus that, based on a charging mode as set for a terminal capable of switching from a mobile communication access network to a radio access network different from the mobile communication access network to communicate therewith, and on information concerning a communication amount of the terminal, controls notification to the terminal of information concerning a radio access network that is different from the mobile communication access network and that is capable of becoming an offload target from the mobile communication access network.

According to the present invention, there is also provided a communication method comprising:
based on information concerning a charging mode as set for a terminal capable of switching from a mobile communication access network to a radio access network different from the mobile communication access network to communicate therewith, and on information concerning a communication amount of the terminal,
a node controlling a notification to the terminal of information concerning a different radio access network that is capable of becoming an offload target from the mobile communication access network.

According to the present invention, there is provided a program that causes a computer constituting a node to perform the processing comprising:
controlling, based on the information concerning a charging mode as set for a terminal capable of switching from a mobile communication access network to a radio access network different from the mobile communication access network to communicate therewith; and on information concerning a communication amount of the terminal, a notification to the terminal of information concerning a different radio access network that is capable of becoming an offload target from the mobile communication access network.

### ADVANTAGEOUS EFFECTS OF INVENTION

According to the present invention, decisions on whether or not to carry out offloading may be made as the communication amount of a terminal, a charging mode and serviceability are taken into account.

### BRIEF DESCRIPTION OF THE DRAWINGS

Fig.1 is a diagram illustrating a configuration of an exemplary embodiment 1 of the present invention.
Fig.2 is a diagram illustrating a sequence of the exemplary embodiment 1 of the present invention.
Fig.3 is a diagram illustrating a configuration of an ANDSF 40 of the exemplary embodiment 1 of the present invention.
Fig.4 is a diagram illustrating in a table format a combination of a charging mode and a usage amount of the exemplary embodiment 1 of the present invention.
Fig.5 is a diagram illustrating a configuration of an exemplary embodiment 2 of the present invention.
Fig.6 is a diagram illustrating a sequence of an exemplary embodiment 2 of the present invention.
Fig.7 is a diagram illustrating the configuration of an exemplary embodiment 3 of the present invention.
Fig.8 is a diagram illustrating a sequence of the exemplary embodiment 3 of the present invention.

### MODES FOR CARRYING OUT THE INVENTION

Exemplary embodiments of the present invention will now be described. According to the exemplary embodiments, as for a terminal that is able to switch from a mobile communication access network to a different radio access network, such as a wireless LAN, to communicate therewith, a notification to the terminal of information concerning a different radio access network that is capable of becoming an offload target for the mobile communication access network, is controlled, based on information concerning a charging mode set to the terminal and on information concerning a communication amount of the terminal, and a decision on whether or not to carry out offloading may be made, in consideration of content of a charging mode content and information on a communication amount of data used in a charging time period.

### <Exemplary Embodiment 1>

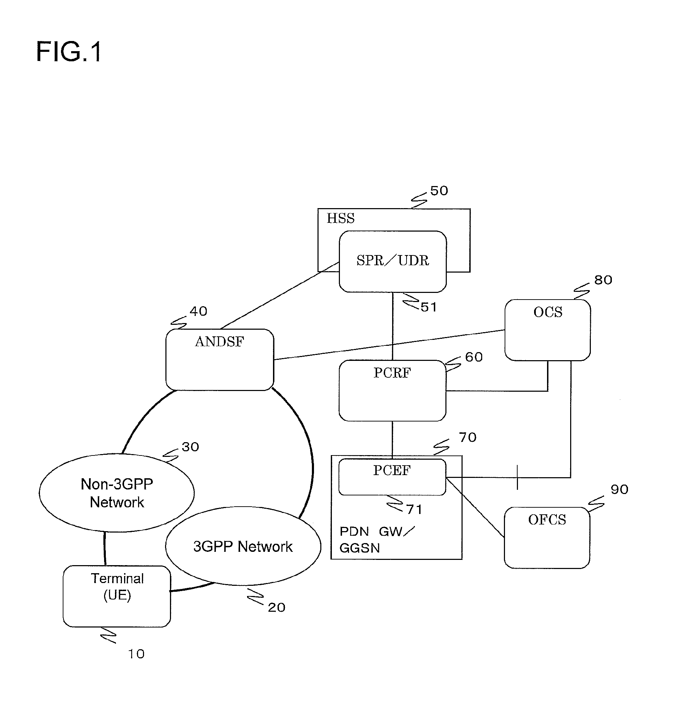

Fig. 1 is a diagram illustrating a configuration of an exemplary embodiment 1 of the present invention. A 3GPP network is used below as a mobile communication access network, though not limited thereto. A charging contract for the 3GPP network, as prescribed in 3GPP, handling of data communication amount during the charging time period and method for offloading, will now be explained. As for details, reference is to be made to 3GPP TS23.203 V11.06 (Third Generation Partnership Project; Technical Specification Group Services and System Aspects; Policy and charging control architecture (release 11)). Fig.1 illustrates a configuration of charging information in 3GPP T23.203 and ANDSF 40 integrated together. As for ANDSF 40, reference is to be made to, for example, 3GPP TS23.402 V11.3.0 (Third Generation Partnership Project; Technical Specification Group Services and System Aspects; Architecture enhancements for non-3GPP accesses (Release 11)); 3GPP TS24.312 V.11.3.0 (Third Generation Partnership Project; Technical Specification Group Core Network and Terminals; and to Access Network Discovery and Selection Function (ANDSF 40) Management Object (MO) (Release 11)).

Referring to Fig.1, a communication terminal (UE) 10 has an access to e.g., the Internet via a 3GPP network 20. It is noted that the communication terminal (UE) 10 may, e.g., be a portable terminal. It may also be a mobile terminal mounted on a car or the like or a fixed terminal in a home or a public phone. The communication terminal (UE) 10 connects to an access point of a wireless LAN network (non-3GPP network 30), such as Wi-Fi network, so as to access e.g., the Internet. It is noted that the 3GPP network 20 includes a radio access network, such as UTRAN (Universal Terrestrial Radio Access Network) or Evolved-UTRAN not shown and a core network such as GPRS (General Packet Radio Service), or the EPC (Evolved Packet Core), not shown, and network nodes 40 to 90 in Fig.1 are connected to the core network side.

Information on charging contract of a subscriber (service contract information) is registered in a subscriber profile repository SPR (Subscriber Profile Repository). In general, the SPR function is implemented in a home subscriber server HSS(Home Subscriber Server) 50 which is a database for subscribers' information.

An online charging subsystem OCS (Online Charging Subsystem) 80 sums and counts a usage amount for a charging time period (data communication amount used or time of use). In general, the OCS is a logical node used for subscribers who are subject to on-line charging (usually pre-paid subscribers). However, in this exemplary embodiment, it is assumed for convenience that the usage amount for a charging time period is summed and counted by the OCS. It is thus presupposed that a device, not shown, equivalent to the OCS, has also been implemented for users subject to off-line charging.

A policy and charging enforcement function PCEF (Policy and Charging Enforcement Function) 71 is configured to carry out the function of transferring a communication packet, a subscriber of the communication terminal (UE) 10 is using, and the function of measuring the subscriber's communication amount.

The PCEF 71 inquires a policy and charging rules function PCRF (Policy and Charging Rules Function) 60 about the manner of handling a packet and charging rules (Or, the PCEF is informed).

The PCEF 71 stands for a function name, and is implemented in a GGSN (Gateway GPRS Support Node) of the GPRS (General Packet Radio Service), in a 3G system, or in a P-GW (PDN (packet data network) Gateway) 70 in an LTE (Long Term Evolution) system. The PCEF 71 informs the PCRF 60 or OCS 80 about subscriber's charging information (used communication amount or communication time).

The PCRF 60 also obtains the charging contract information from an SPR (SPR/UDR 51) to generate a rule to be notified to the PCEF 71.

A offline charging subsystem OFCS (Offline Charging Subsystem) 90 is an offline charging server and counts information for post payment, including per-month payment.

An access network discovery and selection function (ANDSF) 40 is designed to carry out function of notifying to the communication terminal (UE) 10 identification information (SSID (service set identifier in a radio network) of an access network (a non-3GPP network 30), capable of offloading (bypassing), such as wireless LAN or WiMAX (Worldwide Interoperability for Microwave Access), that is other than the 3GPP access network (portable telephone radio network).

Offloading is carried out by the communication terminal (UE) 10 attempting to connect to such one of neighbored radio access networks that has identification information as notified from the ANDSF 40. It is assumed that the communication terminal (UE) 10 has a function of communicating with the 3GPP (such as antennas and a radio frequency unit), and a function of communicating with the radio access network (that is, an access point of the radio network).

In the exemplary embodiment 1, a node apparatus provided on a 3GPP network takes into account charging contract information of a communication terminal subscriber and an amount of data communication used in a current radio access network, in order to decide whether or not to notify identification information of the radio access network of the offload target (in the case of not notifying the identification information, the node apparatus notifies that there is no suitable access network for offload target). The node apparatus then sends back a response to solve the above mentioned problem. The above decision may be made by the ANDSF 40 as it collects needed information from the HSS 50, OSC 80 or the OFC 90. Or, as will be explained in more detail in an exemplary embodiment 2 to follow, the PCRF 60 may give the above decision based on information obtained in the course of processing and may send and response a result to the ANDSF 40.

In the exemplary embodiment 1, in deciding whether or not to inform the communication terminal (UE) 10 about identification information of another radio access network for an offload target, the ANDSF 40 takes into account charging contract information of the subscriber of the communication terminal as well as an amount of data communication used in the current radio access network (such as total packet amount per month).

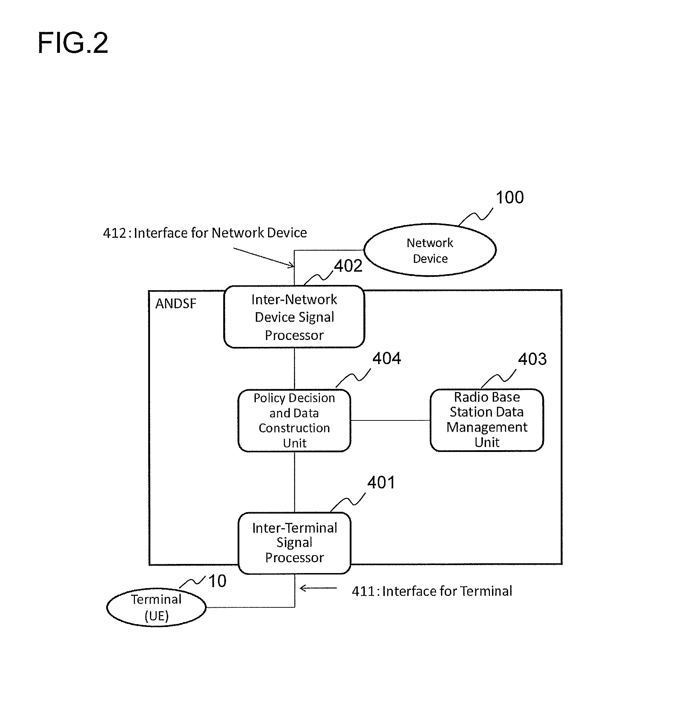

Fig.2 is a diagram illustrating a configuration of the ANDSF 40 of the exemplary embodiment 1. Referring to Fig.2, a network apparatus 100 comprises HSS 50, OCS 80 and OFC 90 of Fig.1. The ANDSF 40 includes
an inter-terminal signal processor 401 that has communication with the communication terminal (UE) 10 via an interface 411 for a terminal disposed between the ANDSF and the communication terminal UE 10,
an inter-network apparatus signal processor 402 that has communication with the network apparatus 100 via an interface 412 for a network apparatus disposed between the ANDSF and the network apparatus,
a radio base station data management unit 403 that manages information of the radio network to be transmitted to the communication terminal (UE) 10, and
a policy decision and data construction unit 404 that, based on a policy, a communication amount, charging contract and so forth, obtaind from the network apparatus 100, decides whether or not to inform the communication terminal (UE) 10 about information concerning a radio access network for offload target. In case of making such notification, the policy decision and data construction unit 404 prepares the information of the notification to be transmitted to the communication terminal (UE) 10.

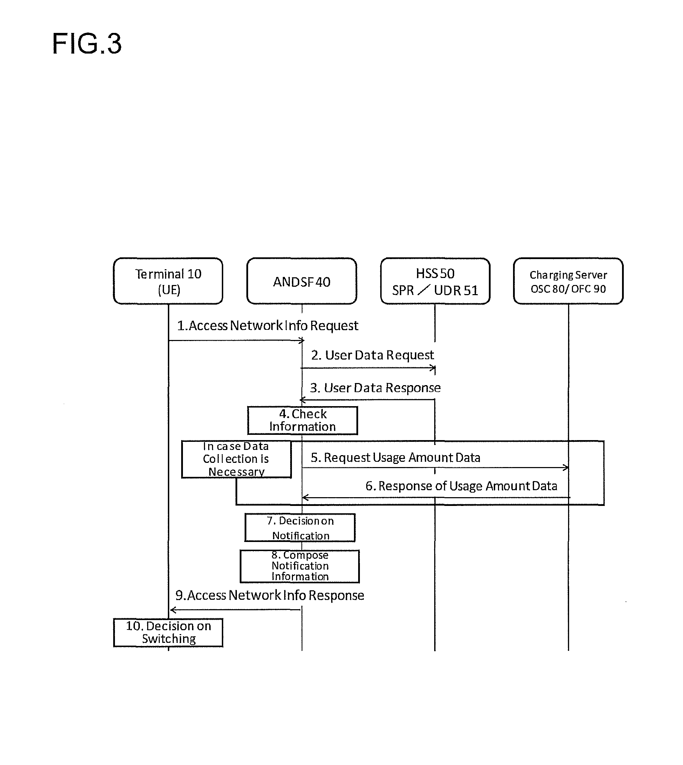

Fig.3 is a diagram illustrating an example of typical sequence of the exemplary embodiment 1. Referring to Fig.3, the communication terminal (UE) 10, ANDSF 40, HSS 50 (SPR/UDR 51) and a charging server OSC/OFCS respectively correspond to the communication terminal (UE) 10, ANDSF 40, HSS 50 (SPR/UDR 51) and the OCS 80/ OFCS 90 of Fig.1. It is now assumed that, before the sequences of Fig.3 are initiated, the communication terminal (UE) 10 uses a 3GPP access network (mobile radio access network) and enters a service area of an access point of a radio access network, such as Wi-Hi network.

### Step 1:

The communication terminal (UE) 10 sends a request for access network information (Access Network Information Request) to the ANDSF 40.

### Step 2:

On receipt of the access network information request (Access Network Information Request) from the communication terminal (UE) 10 by the inter-terminal signal processor 401, the ANDSF 40 transmits a subscriber information request (User Data Request) via the inter-network apparatus signal processor 402 to the HSS 50.

### Step 3:

The HSS 50 sends from to the ANDSF 40 a subscriber information response (User Data Response) to the subscriber information request from the HSS 50.

### Step S4:

The ANDSF 40 receives the subscriber information response (User Data Response) from the HSS 50 at the inter-network apparatus signal processor 402. The ANDSF checks charging mode, contract information or the like, from the subscriber information included in the subscriber information response, while also checking whether it is necessary to collect information from a charging server.

### Step 5:

If it is necessary to collect information from a charging server, the ANDSF 40 sends a usage amount data request from the inter-network apparatus signal processor 402 to the charging server (OCS 80/ OFC 90) to make an inquiry as to a current usage amount.

### Step 6:

The charging server (OCS 80/ OFC 90) returns to the ANDSF 40 a usage amount data response which is a response to the usage amount data request.

### Step 7:

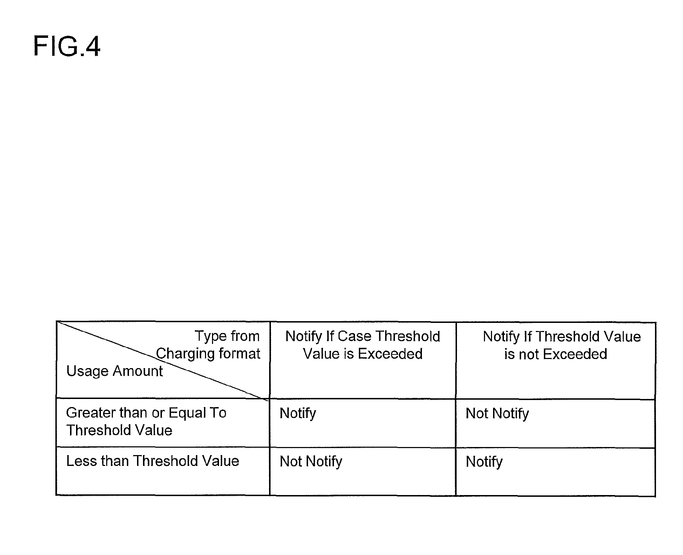

The policy decision and data construction unit 404 of the ANDSF 40 (see Fig.2) decides whether or not to transmit identification information of a radio network, which may become an offload target, to the communication terminal (UE) 10, based on, for example, a combination of:
whether the charging mode for a subscriber in question is
   - of a type which makes notification if the usage amount (traffic amount) exceeds a threshold value or
   - of a type which makes notification if the usage (traffic amount) is less than the threshold value, and
   - whether the usage amount (communication amount) of the subscriber in question exceeds a threshold value, as shown for example in Fig.4.

If a type of the charging mode is such that a notification of identification information of a radio network, such as Wi-Fi, which may become an offload target, will be made when a usage amount (communication amount) exceeds a threshold value,
- the ANDSF 40 notifies to the communication terminal (UE) 10 identification information of a radio network which may become an offload target, when the subscriber's usage amount exceeds the threshold value; and
- when the usage is less than the threshold value, the ANDSF 40 does not notify to the communication terminal (UE) 10 identification information of a radio network which may become an offload target.

If a type of the charging mode is such that, in the case the usage amount (communication amount) is less than a threshold value, identification information of a radio network, which may be an offload target, such as Wi-Fi, is to be notified,
- when the subscriber's usage is less than the threshold value, the ANDSF 40 notifies identification information of a radio network, which may be an offload target; and
- when the subscriber's usage is not less than the threshold value, the ANDSF 40 does not notify identification information of a radio network which may be the offload target. It is noted that a decision table of Fig.4 is merely exemplary and such a table in which identification information is notified when a usage amount is within a certain range and is not notified when the usage amount is not within such range may be arranged and used for giving the decision.

### Step 8:

In notifying identification information of a radio network to the communication terminal (UE) 10, based on the result of decision on whether or not to notify the identification information of the radio network, which may be the offload target, the policy decision and data construction unit 404 of the ANDSF 40 (see Fig.2) constructs a message containing the identification information of the radio network, such as SSID. In the case of not notifying the message, the policy decision and data construction unit 404 of the ANDSF 40 constructs (prepares) a message not containing the identification information of the radio network different from the current network.

### Step 9:

The ANDSF 40 gets the so constructed message included in an access network information response (Access Network Information Response) and transmits the so formed response from the inter-terminal signal processor 401 of the ANDSF 40 (see Fig.2) to the communication terminal (UE) 10.

### Step 10:

Based on the information included in the access network information response (Access Network Information Response), transmitted from the ANDSF 40, the communication terminal (UE) 10 decides whether or not to switch to the non-3GPP network (different radio network).

In the case wherein identification information of a different radio access network has not been notified, the communication terminal (UE) 10 does not switch to the different radio access network on its own. Hence, the communication terminal (UE) 10 keeps on to be connected to the 3GPP access network (mobile radio network). Upon reception of the notification from the ANDSF 40 about identification information of a radio access network, such as SSID, the communication terminal (UE) 10 specifies the identification information (SSID) of the radio network in a request for connection to a wireless LAN access point (Association Request) and transmits the resulting connection request. It is noted that, although a PULL sequence in which the communication terminal (UE) 10 issues a request for access network information (Access Network Information Request) to the ANDSF 40 is described with reference to Fig.3, a similar beneficent result may be achieved with a PUSH sequence in which the access network information is notified to the communication terminal (UE) 10 by an invocation of the ANDSF 40.

In the case wherein a subscriber makes a contract in which if the subscriber exceed an upper limit of a communication amount in the 3GPP access network, limitation is imposed on a communication speed for the subscriber in the 3GPP access network to reduce the communication speed, the ANDSF 40 may manage control so that identification information of a radio access network will be notified to the communication terminal (UE) 10 that has reached the upper limit of the communication amount, and so that no such radio access network identification information will be notified to the communication terminal (UE) 10 that has not reached the upper limit. In this case, such a subscriber that has exceeded the upper limit of the communication amount may be stressed more and more due to communication speed limitation when the subscriber continues to use the 3GPP access network. However, by switching from the 3GPP access network to a radio access network other than the 3GPP network, the subscriber is freed of the limitation on the communication speed and hence may no longer be stressed.

In contrast to the subscriber whose communication amount has not reached its upper limit value, the communication terminal (UE) 10 of the subscriber whose communication amount has already exceeded its threshold value has been switched to the radio access network. As a result, such subscriber may use the 3GPP access network to take precedence over a subscriber whose communication amount has already exceeded the upper limit as prescribed in the contract. That is, a mobile operator may refrain from notifying a radio access network to the communication terminal (UE) 10 of the subscriber whose communication amount has not reached its upper contract limit value, namely, from causing such subscriber to be subject to offloading, and prompt him/her to continue using the 3GPP access network (mobile radio network). It is thus possible to have a subscriber with the communication amount not reaching the upper contract limit use the 3GPP access network (radio mobile network) to take precedence over subscriber that has reached the upper contract limit value. Hence, the present invention as well as exemplary embodiments thereof may be beneficent to both a subscriber whose communication amount has exceeded the upper limit and a subscriber whose communication amount has not exceeded the upper limit, that is, to all subscribers. Stated differently, not one of the two subscribers just mentioned suffers from a disadvantage as compared to the other subscriber.

### <Exemplary Embodiment 2>

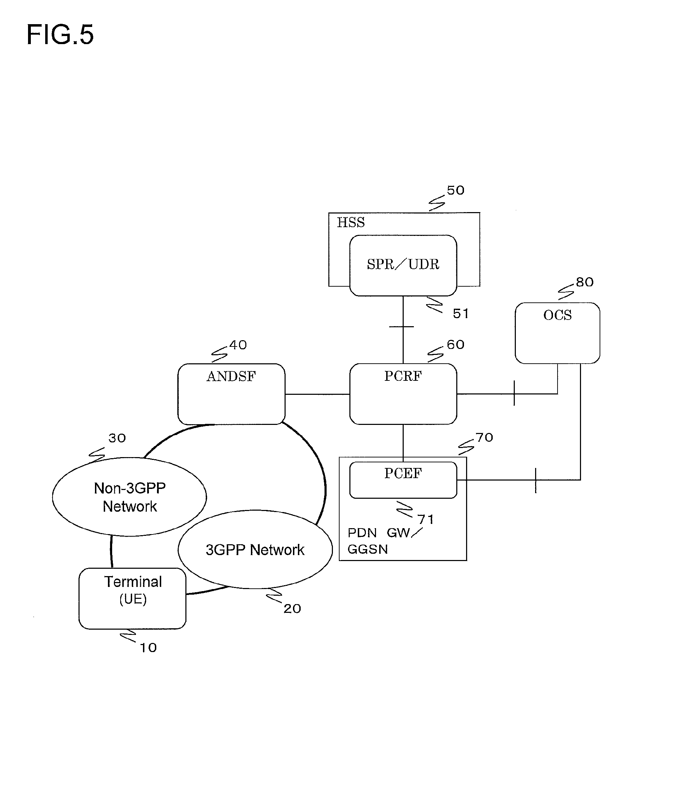

In an exemplary embodiment 2, a decision on whether or not to notify identification information of a radio access network different from the 3GPP network, that is, a non-3GPP access network, is made not by the ANDSF 40, but by the PCRF 60. Fig.5 is a diagram illustrating a system configuration of the exemplary embodiment 2. The PCRF 60 receives a request from the ANDSF 40 which has received a request for the access network information from the communication terminal (UE) 10, obtains subscriber data from the HSS 50 as well as a usage amount from the OCS, and makes a decision on whether or not to notify identification information of the radio access network to the communication terminal (UE) 10. For example, the PCRF 60 obtains charging contract information from the HSS 50 (SPR/ UDR 51), while obtaining a usage amount for a charging time period of interest from the OCS 80. The PCRF 60 decides whether or not to notify the above information based on combination of a type of a charging mode of a subscriber and a communication amount of the communication terminal (UE) 10, in the same way as shown in Fig.4.

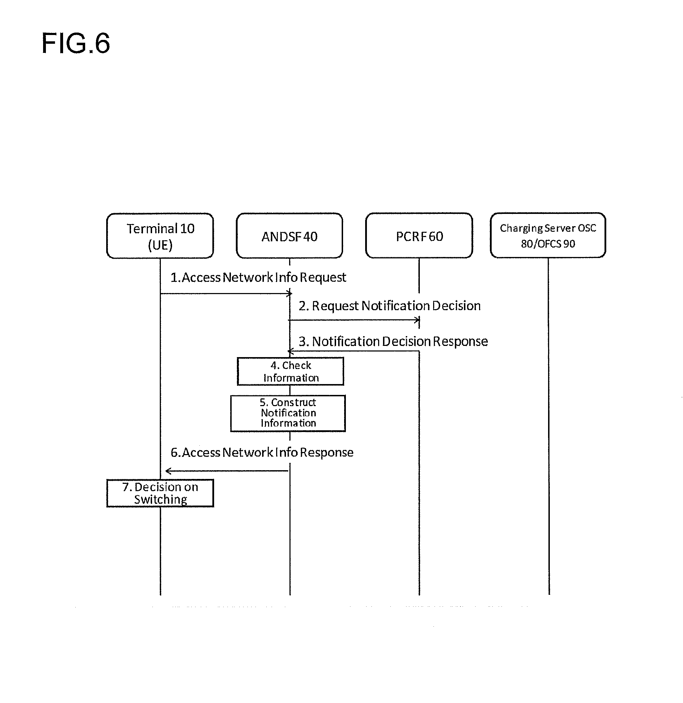

Fig.6 is a diagram illustrating an exemplary sequence of the exemplary embodiment 2. It is assumed that the communication terminal (UE) 10 uses a 3GPP access network (mobile radio network) before start of the procedure of Fig.6, and then enters a service area of another radio access network, such as a Wi-Fi network.

### Step 1:

The communication terminal (UE) 10 sends a request for access network information (Access Network Information Request) to the ANDSF 40.

### Step 2:

On receipt of the access network information request (Access Network Information Request) by the inter-terminal signal processor 401 of the ANDSF 40 (see Fig.2) from the communication terminal (UE) 10, the inter-network apparatus signal processor 402 of the ANDSF 40 (see Fig.2) sends a notification decision request to the PCRF 60.

### Step 3:

The PCRF 60 sends the subscriber information request to a SPR of the HSS 50, and receives subscriber information. The PCRF checks a charging mode from the subscriber information included in a subscriber information response and obtains information on a usage amount from the OCS. From combination of a types of a subscriber's charging mode and a communication amount, the PCRF 60 decides, based e.g., on the decision table of Fig.4, whether or not it is necessary to notify the radio network identification information to the communication terminal (UE) 10. The PCRF 60 gets a result of the decision included in a notification decision response and returns the resulting response to the ANDSF 40.

### Step 4:

The ANDSF 40 checks the notification decision response information from the PCRF 60.

### Step 5:

If, based on the result of decision on whether or not to notify the radio network identification information, the radio network identification information is to be notified, the policy decision and data construction unit 404 of the ANDSF 40 constructs, for the communication terminal (UE) 10, a message including the radio network identification information (for example, SSID or the like). If the radio network identification information is not notified, the policy decision and data construction unit 404 of the ANDSF 40 constructs a message including no identification information for a different radio access network.

### Step 6:

The ANDSF 40 gets the so constructed message included in an access network information response (Access Network Information Request) and sends back the resulting response from the inter-terminal signal processor 401 of the ANDSF 40 (see Fig.2) to the communication terminal (UE) 10.

### Step 7:

Based on the information included in the access network information response (Access Network Information Request), received from the ANDSF 40, the communication terminal (UE) 10 decides whether or not to switch to a radio access network (different radio access network), such as a Wi-Fi network. It is noted that, although a PULL procedure in which the communication terminal (UE) 10 requests the access network information to the ANDSF 40is described with reference to Fig.6, a similar beneficent result may be achieved with a PUSH procedure in which the access network information is notified to the communication terminal (UE) 10 by starting-up of the ANDSF 40.

### <Exemplary Embodiment 3>

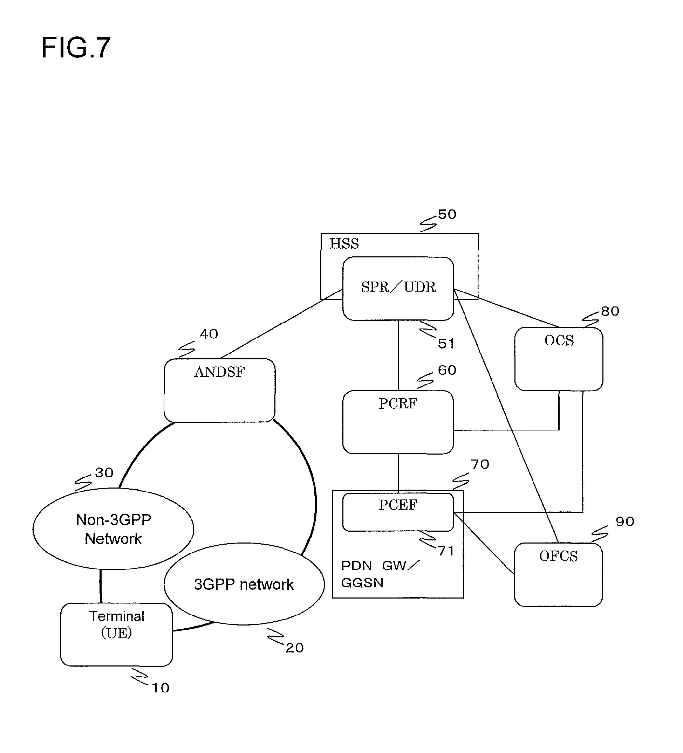

An exemplary embodiment 3 will now be explained. Fig.7 is a diagram illustrating an example of a system configuration of the exemplary embodiment 3. In the exemplary embodiment, a flag indicating whether or not to send identification information of a different radio network is included in subscriber information (Subscriber Profile) retained by a SPR/UDR 51 of the HSS 50 (That is, a field for the flag information is added in a record corresponding to a subscriber ID). For example, if the flag is on, different radio network identification information is notified, and if the flag is off, the different radio network identification information is not notified. In setting a charging mode in a charging server (OCS 80/ OFC 90), the setting is so made as to send a notification to the HSS 50 when a communication amount of a subscriber's terminal reaches a predetermined threshold value.

On receipt of the notification from the charging server (OCS 80/ OFC 90), the HSS 50 operates on the flag, indicative of whether or not to notify identification information of a different radio network, based in accordance with a decision logic shown in Fig.4. On receipt of the access network information request (Access Network Information Request) from the communication terminal (UE) 10, the ANDSF 40 requests the SPR/UDR 51 of the HSS 50 to send the subscriber information thereto. The ANDSF 40 checks a flag in the subscriber information, indicative of whether or not to make notification, and accordingly decides whether or not to make notification to the communication terminal (UE) 10.

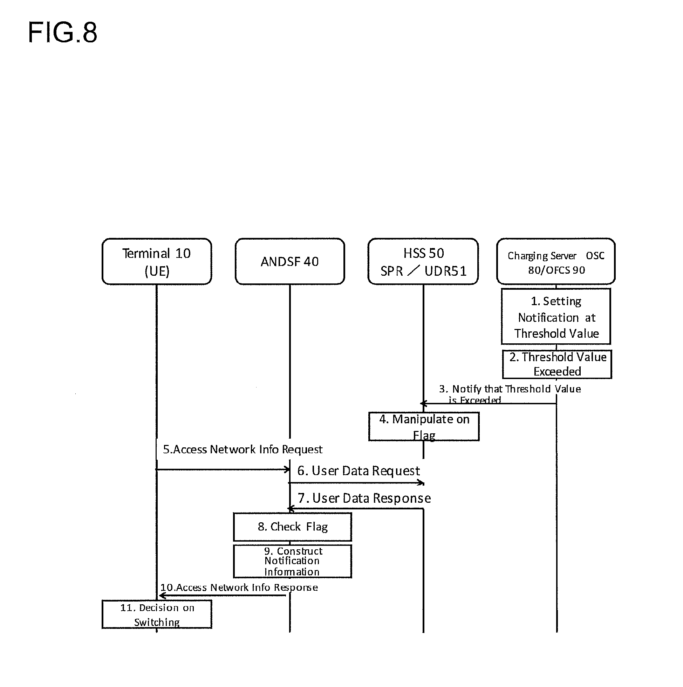

Fig.8 is a diagram illustrating an example of a typical sequence in the exemplary embodiment 3.

### Step 1:

The charging server (OCS 80/ OFC 90) is configured so as to make a notification to the HSS 50 when a communication amount of the communication terminal (UE) 10 reaches a predetermined threshold value.

### Step 2:

In the charging server (OCS 80/ OFC 90), the communication amount of the communication terminal (UE) 10 counted reaches the predetermined threshold value.

### Step 3:

The charging server (OCS 80/ OFC 90) makes the above mentioned notification to the HSS 50.

### Step 4:

On receipt of the above mentioned notification from the charging server (OCS 80/ OFC 90), the HSS 50 manipulates a flag which is included in the SPR/UDR 51 and which indicates whether or not to make a notification of identification information of a different network (radio access network).

It is assumed that the communication terminal (UE) 10 uses a 3GPP network (mobile radio network), and then enters a service area of an access point of a radio access network, such as Wi-Fi network.

### Step 5:

The communication terminal (UE) 10 sends a request for access network information (Access Network Information Request) to the ANDSF 40.

### Step 6:

The ANDSF 40 sends a request for subscriber data (User Date Request) to the SPR/UDR 51 of the HSS 50.

### Step 7:

The SPR/UDR 51 of the HSS 50 sends a subscriber data response (User Data Response) to the ANDSF 40.

### Step 8:

The ANDSF 40 checks a value of a flag in subscriber information which is indicative of whether or not a notification is to be made. The ANDSF 40 accordingly decides whether or not to notify communication terminal (UE) 10 of identification information of a different radio access network.

### Step 9:

When notifying the communication terminal (UE) 10 of identification information of a different radio access network, the ANDSF 40 constructs notification information.

### Step 10:

The ANDSF 40 gets the notification information included in a response of access network information (Access Network Information Response) and sends the resulting response to the communication terminal (UE) 10.

### Step 11:

Based on the notification information received from the ANDSF 40, the communication terminal (UE) 10 checks whether or not to switch from the 3GPP access network to the different radio access network.

In the exemplary embodiment, it is possible to check the possibility of offloading as the communication amount, charging mode and serviceability are taken into account. It is noted that the communication terminal (UE) 10 is not limited to a smartphone provided that the communication terminal UE used has functionality for connection to a mobile communication network and to a radio access network inclusive of Wi-Fi and so forth. That is, the communication terminal (UE) 10 may also be a tablet terminal, a PDA (Personal Digital Assistants), a mobile or fixed terminal. Although a PULL procedure in which the communication terminal (UE) 10 issues a request for access network information to the ANDSF 40 is described with reference to Fig.8, a similar beneficent result may be achieved with a PUSH procedure in which access network information is notified to the communication terminal (UE) 10 by a starting up of the ANDSF 40.

The particular exemplary embodiments or examples may be changed or adjusted within the gamut of the entire disclosure of the present invention, inclusive of claims and drawings, based on the fundamental technical concept of the invention. Moreover, a variety of combinations or selection of elements herein disclosed (including elements of claims, Examples and drawings) may be made within the concept of the claims of the present invention. That is, the present invention may include a variety of changes or corrections that may occur to those skilled in the art in accordance with the total disclosures inclusive of the claims and the drawings as well as the technical concept of the invention. It should be understood that, as regards the ranges of numerical values set out herein, any optional numerical figures or sub-ranges included in the ranges are in fact specifically stated even in the absence of explicit statements.

### REFERENCE SIGNS LIST

- 10: communication terminal (UE: terminal or communication terminal)
- 20: 3GPP network (mobile network)
- 30: non-3GPP network (different mobile network)
- 40: ANDSF (access network discovery and selection)
- 50: HSS (Home Subscriber Server)
- 51: SPR/UDR
- 60: PCRF
- 70: PDN GW/GGSN
- 71: PCEF
- 80: OCS
- 90: OFCS
- 100: network apparatus
- 401: terminal to terminal signal processor
- 402: inter-network apparatus signal processor
- 403: radio base station information management unit
- 404: policy decision and data construction unit
- 411: terminal oriented interface
- 412: network apparatus oriented interface

## Claims

1. A communication system comprising:
a terminal that is able to switch from a mobile communication access network to a radio access network different from the mobile communication access network to communicate therewith; and
a node that controls notification to the terminal of information concerning a radio access network that is different from the mobile communication access network and that is capable of becoming an offload target from the mobile communication access network, based on information concerning a charging mode as set for the terminal and on information concerning a communication amount of the terminal.

2. The communication system according to claim 1, wherein the node is an access network discovery and selection function (ANDSF).

3. The communication system according to claim 2, wherein the access network discovery and selection function (ANDSF) obtains subscriber information of the terminal and the communication amount of the terminal from a subscriber information database (HSS) and a charging server (OCS/OFCS), and decides whether or not to make a notification of information concerning the different radio access network, based on relation of making or not making a notification to the terminal of information on the different radio network, the relation being specified in a charging mode included in the subscriber information, and on the communication amount of the terminal; and wherein,
in case a result of the decision is for making the notification, the access network discovery and selection function (ANDSF) notifies the information concerning the different radio access network to the terminal.

4. The communication system according to claim 1, wherein the node is a policy charging and rules function (PCRF).

5. The communication system according to claim 4, wherein the access network discovery and selection function (ANDSF) sends a notification decision request to the policy charging and rules function (PCRF),
the policy charging and rules function, responsive to the notification decision request, obtains subscriber information from the subscriber information database (HSS) and obtains a charging mode from the subscriber information included in the subscriber information response;
the policy charging and rules function obtaining the information concerning the communication amount of the terminal from the charging server (OCS/OFC);
the policy charging and rules function deciding, from the combination of the types of the charging mode for the subscriber and the communication amount of the terminal, whether or not to notify the information concerning the different radio access network to the terminal,
the policy charging and rules function getting the results of the decision included in a response to the notification decision request to send the resulting response back to the access network discovery and selection function (ANDSF), and
the access network discovery and selection function (ANDSF) notifying the information concerning the different radio access network to the terminal in case the result of the decision is for making the notification.

6. The communication system according to claim 1, wherein in case the charging mode for the subscriber is such that should the communication amount of the terminal exceed a predetermined threshold value, the information concerning the different radio access network is notified,
the node notifies the information concerning the different radio access network when the communication amount of the terminal exceeding the threshold value, the node not notifying the information concerning the different radio access network when the communication amount of the terminal not exceeding the threshold value, and wherein
in case the charging mode is such that should the communication amount of the terminal be less than the threshold value, the information concerning the different radio access network is notified,
the node notifies the information concerning the different radio access network when the communication amount of the terminal being less than the threshold value, the node not notifying the information concerning the different radio access network when the communication amount of the terminal being not less than the threshold value.

7. The communication system according to claim 1, wherein in case the charging mode for the subscriber is such that should the communication amount of the terminal be within a preset range, the node notifies to the terminal the information concerning the different radio access network,
the node notifies to the terminal the information concerning the different radio access network when the communication amount of the terminal being within the range, the node not notifying to the terminal the information concerning the different radio access network when the communication amount of the terminal not being within the range.

8. The communication system according to claim 1, wherein in setting the charging mode for a subscriber in a charging server (OCS/OFCS), the setting is so made that a notification is made to a subscriber information database (HSS) when the communication amount of the terminal reaches a predetermined threshold value,
the subscriber information database (HSS) performs manipulation on a flag indicating whether or not to make a notification of the identification information concerning a different radio access network, when the notification is received from the charging server (OCS/OFCS), and wherein
when requested by the terminal, the node issues a request for the subscriber information to the subscriber information database, and
the node checks the flag in the subscriber information to make a decision on whether or not to make the notification to the terminal.

9. The communication system according to claim 8, wherein the node is an access network discovery and selection function (ANDSF).

10. The communication system according to claim 9, wherein when the terminal enters an access range of the different radio access network, the terminal sends a request for access network information to the access network discovery and selection function (ANDSF), and
the access network discovery and selection function (ANDSF) gets the information concerning the different radio access network included in an access network information response to send the resulting response back to the terminal.

11. The communication system according to any one of claims 1 to 10, wherein the different radio access network is a wireless LAN network, and wherein
the information on the different radio access network, notified to the terminal, includes identification information of the wireless LAN network.

12. A node apparatus wherein based on a charging mode as set for a terminal capable of switching from a mobile communication access network to a radio access network different from the mobile communication access network to communicate therewith, and on information concerning a communication amount of the terminal, controls notification to the terminal of information concerning a radio access network that is different from the mobile communication access network and that is capable of becoming an offload target from the mobile communication access network.

13. The node apparatus according to claim 12, wherein the node apparatus is an access network discovery and selection function (ANDSF).

14. The node apparatus according to claim 13, wherein the access network discovery and selection function (ANDSF) obtains subscriber information on the terminal and the communication amount of the terminal from a subscriber information database (HSS) and a charging server (OCS/OFCS), and decides whether or not to make a notification of the information concerning the different radio access network, based on relation of making or not making notification to the terminal of the information on the different radio access network, as prescribed in a charging mode included in the subscriber information, and on the communication amount of the terminal, and wherein
in case the result of the decision is for making the notification, the access network discovery and selection function (ANDSF) notifies the information concerning the different radio access network to the terminal in a response to the request from the terminal.

15. The node apparatus according to claim 12, wherein the node apparatus is a policy charging and rules function (PCRF).

16. The node apparatus according to claim 15, wherein the access network discovery and selection function (ANDSF) sends a notification decision request to the policy charging and rules function, and wherein
the policy charging and rules function, responsive to the notification decision request, obtains subscriber information from the subscriber information database (HSS) and obtains the charging mode from the subscriber information included in a subscriber information response,
the policy charging and rules function obtains information concerning the communication amount of the terminal from the charging server (OCS/OFC),
the policy charging and rules function decides, from combination of a type of the charging mode for the subscriber and the communication amount of the terminal, whether or not to notify to the terminal the information concerning the different radio access network,
the policy charging and rules function gets a result of the decision included in a response to the notification decision request to send the resulting response back to the access network discovery and selection function (ANDSF), and wherein
the access network discovery and selection function (ANDSF) notifies the information concerning the different radio access network to the terminal in case the result of the decision is for making the notification.

17. The node apparatus according to claim 12, wherein in case the charging mode for the subscriber is such that should the communication amount of the terminal exceed a predetermined threshold value, the information concerning the different radio access network is notified,
the node notifies the information concerning the different radio access network when the communication amount of the terminal exceeding the threshold value, the node not notifying the information concerning the different radio access network when the communication amount of the terminal not exceeding the threshold value, and wherein
in case the charging mode is such that should the communication amount of the terminal be less than the threshold value, the information concerning the different radio access network is notified,
the node notifies the information concerning the different radio access network when the communication amount of the terminal being less than the threshold value, the node not notifying the information concerning the different radio access network when the communication amount of the terminal being not less than the threshold value.

18. The node apparatus according to claim 12, wherein in case the charging mode for the subscriber is such that should the communication amount of the terminal be within a preset range, the node notifies to the terminal the information concerning the different radio access network,
the node notifies to the terminal the information concerning the different radio access network when the communication amount of the terminal being within the range, the node not notifying to the terminal the information concerning the different radio access network when the communication amount of the terminal not being within the range.

19. The node apparatus according to claim 12, wherein in setting the charging mode for a subscriber in a charging server (OCS/OFCS), the setting is so made that the notification is made to a subscriber information database (HSS), when the communication amount of the terminal reaches a predetermined threshold value, wherein
when the notification is received from the charging server (OCS/OFCS), the subscriber information database (HSS) performs manipulation on a flag that indicates whether or not to make notification of identification information concerning a different radio access network, and wherein
when requested by the terminal, the node issues a request for subscriber information to the subscriber information database, and
the node checks the flag in the subscriber information to make a decision on whether or not to make notification to the terminal.

20. The node apparatus according to claim 19, wherein the node apparatus is an access network discovery and selection function (ANDSF).

21. The node apparatus according to claim 20, wherein when the terminal enters an access range of the different radio access network, the terminal sends a request for access network information to the access network discovery and selection function (ANDSF),
the access network discovery and selection function (ANDSF) gets the information concerning the different radio access network included in an access network information response to send the resulting response back to the terminal.

22. The node apparatus according to any one of claims 12 to 21, wherein the different radio access network is a wireless LAN network; and wherein
the information on the different radio access network, notified to the terminal, includes identification information of the wireless LAN network.

23. A communication method comprising:
based on information concerning a charging mode as set for a terminal capable of switching from a mobile communication access network to a radio access network different from the mobile communication access network to communicate therewith, and on information concerning a communication amount of the terminal,
a node controlling a notification to the terminal of information concerning a radio access network that is different from the mobile communication access network and that is capable of becoming an offload target from the mobile communication access network.

24. The communication method according to claim 23, wherein the node is an access network discovery and selection function (ANDSF).

25. The communication method according to claim 24, comprising:
the access network discovery and selection function (ANDSF) obtaining subscriber information of the terminal and the communication amount of the terminal from a subscriber information database (HSS) and a charging server (OCS/OFCS), and deciding whether or not to make a notification of information concerning the different radio access network, based on relation of making or not making a notification to the terminal of information on the different radio network, the relation being specified in a charging mode included in the subscriber information, and the communication amount of the terminal, and
in case a result of the decision is for making the notification, the access network discovery and selection function (ANDSF) notifying the information concerning the different radio access network to the terminal.

26. The communication method according to claim 23, wherein the node is a policy charging and rules function (PCRF).

27. The communication method according to claim 26, comprising:
the access network discovery and selection function (ANDSF) sending a notification decision request to the policy charging and rules function (PCRF);
the policy charging and rules function, responsive to the notification decision request, obtaining subscriber information from the subscriber information database (HSS) and obtaining the charging mode from the subscriber information included in a subscriber information response;
the policy charging and rules function also obtaining information concerning the communication amount of the terminal from the charging server (OCS/OFC);
the policy charging and rules function deciding, from combination of a type of the charging mode for the subscriber and the communication amount of the terminal, whether or not to notify to the terminal the information concerning the different radio access network;
the policy charging and rules function getting a result of the decision included in a response to the notification decision request to send the resulting response back to the access network discovery and selection function (ANDSF); and
the access network discovery and selection function (ANDSF) notifying the information concerning the different radio access network to the terminal in case the result of the decision is for making the notification.

28. The communication method according to claim 23, comprising:
in setting a charging mode for a subscriber in the charging server (OCS/OFCS), the setting being so made that a notification is made to a subscriber information database (HSS) when the communication amount of the terminal reaches a predetermined threshold value;
the subscriber information database (HSS) manipulating on a flag that indicates whether or not to make the notification of the identification information concerning a different radio access network when the notification is received from the charging server (OCS/OFCS); and
when requested by the terminal, the node issuing a request for subscriber information to the subscriber information database;
the node checking the flag in the subscriber information to make a decision on whether or not to make notification to the terminal.

29. The communication method according to claim 28, wherein the node is an access network discovery and selection function (ANDSF).

30. A program that causes a computer constituting a node to perform the processing comprising:
controlling, based on information concerning a charging mode as set for a terminal capable of switching from a mobile communication access network to a radio access network different from the mobile communication access network to communicate therewith, and on information concerning a communication amount of the terminal,
a notification to the terminal of information concerning a radio access network that is different from the mobile communication access network and that is capable of becoming an offload target from the mobile communication access network.

31. A communication terminal that makes connection to a radio access network different from a mobile communication access network based on information concerning a different radio access network, notified based on information concerning a charging mode and on information concerning a communication amount.

32. A terminal apparatus (User Equipment) wherein the terminal apparatus is configured to be able to switch from a mobile communication access network to a radio access network different from the mobile communication access network, and wherein
the terminal apparatus is configured to receive information concerning a different radio access network that is capable of becoming an offload target from the mobile communication access network, or the information concerning the different radio access network is not notified to the terminal,
based on a decision that is made by a node based on information on a charging mode of the terminal apparatus, and on information on a communication amount of the terminal apparatus, the node being an access network discovery and selection function (ANDSF) or a policy charging and rules function (PCRF).
